# EUROPÄISCHE PATENTSCHRIFT

(11) **EP 0 358 947 B1**
(45) Veröffentlichungstag und Bekanntmachung des Hinweises auf die Patenterteilung: **03.11.1993**
(21) Anmeldenummer: 89114704.3
(22) Anmeldetag: 09.08.1989
(51) Int. Cl.: A01C 5/06, A01B 49/04

(54) **Säschare in Wirkverbindung mit einer Bodenwalze**
Seed drill coulter cooperating with a roller
Soc de semoir coopérant avec un rouleau

(30) Priorität: 16.08.1988 DE 3827770
(43) Veröffentlichungstag der Anmeldung: 21.03.1990
(73) Patentinhaber: Güttler, Fritz, D-73235 Weilheim (DE)
(72) Erfinder: Güttler, Fritz, D-73235 Weilheim (DE)

(56) Entgegenhaltungen:
- EP-A- 0 070 396
- FR-A- 972 398
- US-A- 3 319 590
- US-A- 4 425 857

## Beschreibung

Säschare zur Aussaat und Einbettung in landwirtschaftlich genutzte Böden von körnigem Gut aus einer Sämaschine, angeordnet nebeneinander, jeweils im Abstand zueinander in einer Reihe quer zur Fahrtrichtung oder in mehreren Reihen hintereinandergestaffelt, in Wirkverbindung mit einer entsprechend ausgestalteten Bodenwalze, nach dem Obergriff des Anspruchs 1.

Derartige Säschare sind bereits aus US-A-3 319 590 bekannt.

Die Erfindung betrifft Säschare und ihre Anordnung in Wirkverbindung mit einer Bodenwalze, deren Walzen-Einzelelemente auf zugeordneten, in Draufsicht gesehen quer zur Fahrtrichtung liegenden Achswellen mit axialem Abstand zueinander angeordnet sind, wobei immer mindestens jeweils ein Säschar im Bereich des axialen Abstandes zwischen jeweils zwei benachbarten Walzen-Einzelelementen und vorzugsweise innerhalb deren Umkreises in den Boden eingreifend angeordnet ist.

Es sind am Pflug anhängbare, schwere Ringpacker bekannt, die mit einem Aufsetz-Säkasten ausgerüstet sind, die das Saatgut über Saatleitungen aus einer mehr oder weniger großen Höhe in die von den Packerringen ausgeformten Bodenrillen fallen lassen. Dieses Verfahren konnte sich aus mancherlei sachlichen Gründen nicht einführen und ist für die Aufgabenlösung zufolge des Erfindungsgedankens auch nicht geeignet.

Die immer mehr in der Praxis in neuerer Zeit zur Anwendung kommende sogenannten konservierende Bodenbearbeitung, nur oberflächennah die Stroh-und sonstigen Pflanzenrückstände einmulchende und nicht Boden-wendende Saatbettbereitung mittels meist zapfwellengetriebender Bodenbearbeitungsmaschinen, hat die Verstopfungsprobleme an und zwischen den herkömmlichen Sämaschinenscharen so eklatant vergrößert, daß die meisten Sämaschinen-Hersteller deshalb versuchten und weiter versuchen durch das Angebot von Ein-oder Zweischeiben-Sä-Rollscharen oder/und das Staffeln der Säschare in drei oder gar vier Reihen hintereinader das immer drängender werdende Verstopfungs-Problem auf ein praxiserträgliches Maß mindestens zu mindern.

Diese Lösungsversuche rufen aber gleichzeitig andere Probleme hervor, nämlich, daß die betreffenden Sämaschinen erheblich weiter nach hinten ausladen und gleichzeitig auch erheblich schwergewichtiger sind, sodaß das Hubvermögen der einzusetzenden Schlepper oft überfordert oder/und die zulässige Vorderachsentlastung im Straßenverkehr erheblich überschritten ist. Außerdem ist das Handling solcher Maschinen sehr erschwert, die Kombinationsfähigkeit mit den Bodenbearbeitungsmaschinen aus den vorgenannten Gründen stark eingeschränkt, wenn nicht unmöglich, die Anschaffungskosten spürbar erhöht, die Verschleißkosten merklich vergrößert.Dies sind nur die Wesentlichsten.

Andere Anbieter von Bodenbearbeitungsmaschinen mit aufgesattelter Sämaschine greifen das altbekannte Verfahren der Einleitung der Saatleitungs-Rohrenden in den von der Bodenbearbeitungsmaschine nach hinten geworfenen Bodenstrom neu auf, doch die Saatgut-Tiefeneinbettung ist nicht konstant haltbar, insbesondere fehlt die nötige Bodenrückfestigung vor der Saatablage und die nachfolgende Trag-und Stützwalze der Bodnebearbeitungsmaschine, meist in Form der sog.Zahnpackerwalze preßt die obere Bodenzone zusammen und nimmt fast immer diese Preß-Schicht mit den darin eingeschlossenen Samen zwischen den zum Rollantrieb der Walze unumgänglichen Zahnreihen beim Abrollen mit nach oben, wo schließlich Abstreifer das Ganze abspachteln mit dem Ergebnis, daß die zurückfallende Erdschicht viel zu tief locker ist, wodurch die locker und unregelmäßig tief eingebetteten Sammenkörner keinen Kapillarwasser-Kontakt haben, niederschlagsabhängig ungleich keimen und Aufgangschäden mit letztlicher Ertragsminderung zeigen.

Die Erfindung hat sich zum Ziel und zur Aufgabe gestellt, einerseits die dargelegten Mängel zu beseitigen und andererseits darüber hinaus, z.B.hinter Bodenbearbeitungsmaschinen, auch mit zusätzlich aufgesattelter Sämaschine, neben einer besseren und homogeneren Rückfestigung des locker aufgearbeiteten Bodenstromes mittels neuartiger Nachlaufwalzen, z.B.nach Art DE-A-35 41 543 und DE-A-35 46 754, jetzt vorrangig eine Säschar-Ausgestaltung- und Anordnung zu schaffen, die es ermöglicht,bei nur einer einreihigen, allerhöchstens zweireihigen Säscharstaffelung- bzw.Nebeneinanderordnung zum Zweck extrem kurzer Gerätebaulängen-Gestaltung, die in jüngerer Zeit immer mehr praktizierte, aber mit den bislang verfügbaren, bekannten Sämaschinen nur schwierig und sehr verstopfungsanfällig durchzuführende Einsaat von Könerfrüchten in ein mit Pflanzenmulch stark angereichertes Saatbett auf einem rückgefestigten Saathorizont in vorprogramierbarer Saatablagetiefe und zuverlässig verstopfungsfrei zu gewährleisten, damit eine alte ackerbauliche Wunschvorstellung zu realisieren.

Zwar ist nach US-A-3 319 590 vom 10.5.67 eine auf mehrachsigem Fahrgestell aufgebaute und gezogene Sämaschine im Recherchenbericht bekannt geworden, wo auf einer gemeinsamen Achse nach aussen tellerartig gewölbte Rollscheiben paarweise mit ihrer geradflächigen Seitenflanke in geringem Abstand einander zugekehrt, vorgeschlagen sind, zwischen denen jeweils ein entsprechend schmal geformtes Säschar aus dem vor der Achse liegendem Rollscheiben-Umkreis weit nach vorne nasenartig abragt und dessen nach oben fliehender Nasenrücken den Umkreis des Rollscheibenpaares in Achshöhe nicht oder nur ganz gering tangiert und von dort ab weiter nach oben C-artig aus der Umkreislinie wieder herausführt. Als eigentlicher Zweck der Erfindung ist angegeben, daß das Säschar, Furchenzieher genannt, seine Seitenflächen durch das jeweilige Rollscheibenpaar von Erde frei halten soll, bis das Rollscheibenpaar,Radpackerwalze genannt, den Boden seitlich nach unten weggedrückt hat, wobei sie die Tiefe des Bodens über der Saat konstant beibehält, unabhängig von der Tiefe mit der der Furchenzieher/Säschar das Erdreich durchbricht und die Saat in die feuchte Erde gesetzt werden soll. Ist die trockene Deckschicht tiefer, so sollen die Rollscheibenpaare/Packerräder eine entsprechend tiefe Furche in den Oberboden seitlich wegdrücken, in dessen Sohle die Saatrille in den anstehenden feuchten Boden gezogen wird. Es wird also eine Art Graben gezogen, in welchem die keimende Saat und später die Pflanzen tiefer stehen, als die Dammkronen.

Eine solche Saat-Gestaltung hat bei stärkeren Niederschläge erhebliche Nachteile und Gefahren für Keimling, Pflanze und Boden. In ebenem Gelände bleibt Stauwasser in den Saatgräben stehen und verschlämmt das Sohlenbett mit Luft-abschließender Verkrustung beim Abtrocken. Der Pflanzenlebensnotwendige Gasaustausch kommt zum Erliegen. In hüglichem Gelände sammeln die Saatgräben das Stauwasser bis zum Überlauf und Bodenerosionen hangabwärts sind die Regelfolge.
Ein anderer Zweck der Erfindung US-A-3 319 590 soll darin bestehen, daß in Verbindung mit dem Säschar/Furchenziehersystem auch die Pflanzenrückstände beseitigt,d.h.vom Furchenzieher nach rückwärts weg-gezogen werden sollen. Gerade aber dieser Zweck, der bei meiner Anmeldung den Hauptzweck darstellt, wird von der Säschar/Furchenzieher-Ausgestaltung zufolge US-A-3 319 590 unter den heutigen und weiterhin gültigen Gegebenheiten der in den Oberboden einzumulchenden großen Strohmassen von 60-90 dt je ha Ackerfläche plus der etwa gleichen Maße an Wurzelrückständen, in keinem Falle mehr erfüllt, wie umfangreiche und mehrfache,analog gerührte Feldversuche des Anmelders in jedem einzelnen Falle unwiderlegbar ausgewiesen haben.

Die Erfindung hat sich weiter zum Ziel und zur Aufgabe gestellt, auch die bei US-A-3 319 590 vorhandenen und aufgezeigten Mängel vollständig zu beseitigen, nämlich den Mulch-Saatbettoberboden ganzflächig und wurzelraumtief rückzufestigen, bis auf die pflanzenspezifisch richtige Saatablagetiefe, die Saatkörner oberflächen-niveau-eben in eine gleichbleibende , vorprogrammierbare Saattiefe einzubetten, mit Krümelerde flach abzudecken, und vor allem die Säschare so anzuordnen, dass eine verstopfungsfreie Saat auch bei extremen Mulchmassenanteil im Saatbett sicher gewährleistet ist.
Zu diesem Zweck wird erfindungsgemäß vorgeschlagen, Säschare bekannter, oder von denen abgeleiteter oder modifizierter Bauart und Ausführung mit einer geeigneten Bodenwalze,wie sie z.B.aus DE-A-35 41 543 und DE-A-35 46 754 bekannt ist, in geeigneter Weise, Form und Anordnung miteinander in eine dem Zweck voll entsprechende Wirkverbindung zu zu bringen, indem zwischen jeweils zwei benachbarten und im axialem Abstand zueinander auf einer gemeinsamen Achswelle angeordneten Walzen-Einzelelementen, z.B. zufolge DE-A-35 41 543 oder DE-A-35 46 754 jeweils mindestens ein Säschar in geeigneter Weise so angeordnet ist, daß die in den Boden eingreifende Vorderkante des Säschares vorzugsweise innerhalb, höchstens aber nahe außerhalb des Umkreises der Walzen-Einzelelemente in den Boden eingreift bzw. mündet.

Diese erfindungsgemäße Zueinanderordnung von Bodenwalze und Säschare zur Wirkverbindung gewährleistet auch bei extrem großer Pflanzenmulchmasse im Saatbett mit großer Sicherheit selbst bei engen Säreihenabständen und gleichzeitig einreihiger, höchstens zweireihiger, aber kurz gestaffelter Särohr-Nebeneinanderordnung, eine weitestgehende Säschar-Verstopfungsfreiheit dadurch, daß jeweils die zwei benachbarten Walzen-Einzelelemente, zumal wenn sie auf ihrem Umkreis gezackt ausgeführt sind, die Pflanzenmulchmasse im und auf dem Boden nach unten zusammenpressen, somit gleichzeitig den Wurzelraum rückfestigen, die Mulchmasse ortsgebunden festhalten, während dazwischen das jeweils in den Boden eingreifende und darin vorwärts ziehende Säschar mit seiner Vorderkante in wähl-und einstellbarer Tiefe die Särille öffnet und gleichzeitig die links und rechts von den Walzen-Einzelelementen am Boden festgehaltene Mulchmasse durchtrennt, sodaß das Säschar in seiner gänzlichen Baulänge verstopfungsfrei vorbeigleitet. Ausgiebige und umfangreiche Feldversuche unter extrem schwierigen Witterungs-Boden-und Mulchbedingungen haben diese Aussage in vollem Umfang bestätigt.

Die Erfindung eröffnet dem Maschinenhersteller als auch dem Praxis-Anwender somit ganz neue praktikable Möglichkeiten technischer und ackerbaulicher Art, vermindert zugleich die Herstell-somit auch die Anschafffungskosten, ebenso die Betriebs-und Ersatzteilkosten, weil erstmals Walzen und verstopfungsfreies Säen realisiert ist, außerdem zusammengefaßt in einer einzigen Maschine, wo zudem die einzelnen Walzenelemente gleichzeitig das für den Solo-Sämaschinen-Einsatz unbedingt erforderliche Sämaschinen-Fahrwerk bilden, sodaß also für den Solo-Gebrauch das bei allen bekannten Aufsattel-Sämaschinen zusätzlich anzuschaffende Fahrwerk sich hier erübrigt. Außerdem erübrgt sich die separate Anschaffung einer Bodenwalze. Alleine das sind erhebliche Kostenersparnisse, unabhängig von den gegebenen arbeitstechnischen, ackerbaulichen und betriebswirtschaftlichen Vorteilen, die der Praxis-Anwender in die Hand bekommt.

Die erfindungsmäßige Neuerung ist anhand einiger Ausführungsbeispiele in Fig. I - VIII näher dargestellt und im nachfolgenden beschrieben.
- Fig.I: zeigt in Ansicht von hinten ein Walzenabteil einer Bodenwalze mit auf axialem Abstand angeordneten Walzen-Einzelelemente auf einer Achswelle und zwischen je zwei benachbarten Walzenelementen ein Säschar, das mit seiner Vorderkante innnerhalb des Umkreises der Walzenelemente in den Boden greift, mit nach oben abragender Saatzuführleitung,angeordnet **vor** der Achswelle.
- Fig. II: zeigt dasselbe wie Fig. I, jedoch in Draufsicht.
- Fig. III: zeigt das gleiche Fig. I und Fig II, jedoch in Seitenansicht mit im Bodeneingriff **vor** der Achswelle angeordnetem Säschar.
- Fig. IV: zeigt dasselbe wie Fig III, jedoch mit federnd aufgehängtem Säschar mit Saattiefenbegrenzer und mit Bodenausräumer für die beiden benachbarten Walzeneinzelelemente, ferner jedoch mit hinter der Achswelle im Bodeneingriff angeordnetem Säschar.
- Fig. V: zeigt in Draufsicht die hinter der Achswelle angeordneten Säschare.
- Fig. VI: zeigt in Seitenansicht die Säscharanordnung **vor** der Achswelle, jedoch mit Saatleitungsrohr-Verlängerung unter die Achswelle hindurch nach hinten und Schar-Bodeneingriff hinter der Senkrechten zur Achswelle.
- Fig. VII: zeigt in Seitenansicht schematisch dargestellt, eine Bodenbearbeitungsmaschine mit zugeordneter und auf Lücke ineinandergreifender Doppelachs-Bodenwalze,mit aufgesetztem Sämaschinenkasten, Saatzuleitungsrohr und an dessen unterem Ende ein im Bodeneingriff stehendes Säschar und die Säscharhalterung an der Bodenwalze.
- Fig. VIII: zeigt in Draufsicht das gleiche wie Fig. V mit der Säschar-Bodeneingriffanordnung innerhalb des Umkreises der Walzenelemente, jadoch mit der Särohr-Anordnung an das Säschar außerhalb des Umkreises.

Für die erfindungsmäßig vorrangig vorgesehene Verstopfungsfreiheit zwischen den Walzen-Einzelelementen und dem jeweilig zwischen deren zwei angeordneten Säschar ist es entscheidend, daß der Säschar-Bodeneingriff, in Draufsicht gesehen innerhalb des Umkreises der Walzen-Eizelelemente beginnend angeordnet ist.

Säschar (1) einer zugehörenden Sämaschine (2) und beiden miteinander verbindende Saatzuleitungen (3) sind mittels eines üblichen und allgemein bekannten Ver-bindungsgliedes (4), (13.1) beweglich oder bei Bedarf fixierbar mit einer Bodenbearbeitungsmaschine (5) bei der Arbeit abstützenden Bodenwalze (7) und deren Walzen-Einzelelemente (6) auf den Achswellen (8) mit axialem Abstand (x) nebeneinander aufgereiht sind, dergestalt zur Wechselwirkung miteinander verbunden, daß die Säschare (1) vorzugsweise zu einem kompletten Aggregat zusammengefaßt und angebracht sind und daß mindestens jeweils eines davon zwischen je zwei benachbarten Walzen-Elementen (6) angeordnet ist und zwar mit Bodeneingriff - Beginn der Säschare (1) **innerhalb** des Walzenelemente-Umkreises, in Draufsicht **vor** der Achswelle (8), Fig. I -III, oder **hinter** der Achswelle (8), Fig. IV, V, VIII.

Die verschieden-örtliche Säscharanordnung am Rahmen der Bodenwalze (7) bzw. zu den Walzen-Einzelelementen (6) ist durch an entsprechenden Stellen des Walzenrahmens angebrachten Halterungen zweckentsprechender Art, die in den Zeichnungen nicht dargestellt sind, vorgesehen.

Die verschieden-örtliche Säschar-Anordnungsmöglichkeit wird aus folgenden Gründen vorgeschlagen:
Vom Landwirt wird in der Regel gefühlsmäßig die Anordnung zufolge Fig. I-III und VII bevorzugt, also **vor** der Achswelle (8).
Muß damit aber in nassem Lehm- oder Tonboden z. B. im Herbst gearbeitet werden,so kann es leicht vorkommen, daß bei schwerer Gewichtsauflastung auf die Bodenwalze, hinter dem Säscharende zwischen den jeweils zwei benachbarten Walzen-Einzelelementen nasser Boden einklemmt und von ersteren beim Weiterrollen aus der Bodenoberfläche samt den vorangehend eingebetteten Saatkörnern heraus- und hochgerissen, sodann etwa auf halber Walzenhöhe von Ausräumfingern oder dem gegenläufigen hinteren Doppelachs-Element ausgeräumt wird, wobei dieser Boden und die darin befindlichen Saatkörner durcheinandergewirbelt werden und ohne Kapillarkontakt wieder die Oberfläche bedecken, mit vielen obenaufliegenden Saatkörnern.
Aufgang- und Folgeschäden sind vorprogrammiert. In solchem Falle ist eine Säschar-Umordnung **hinter** die Achswelle (8) zufolge Fig. IV, V oder die Anordnung Fig. VI geboten.
Noch empfehlenswerter ist bei solchen Bodenzuständen jedoch die Säschar-Zuordnung nach Fig. VIII. Die Säschare (1.3) greifen in Draufsicht gesehen hinter der Achswelle (8) und zwischen den Walzenelementen (6) und innerhalb deren Umkreises mit ihrer Vorderkante in den Boden und reichen mit ihrem waagrechten Teil nach hinten aus dem Umkreis der Walzenelemente (6) hinaus, wo schließlich das Särohr (3) angeordnet ist.

Weitere Einzelheiten und Möglichkeiten der Säscharanordnung und der daraus ableitbaren Vorteile gehen aus den Zeichnungen hervor. So ist in Fig.IV ein Abstreiffinger (10) dargestellt, der als Zusatz an einem, Säschar (1) angeordnet ist, um an den Seitenflanken der Walzenelemente anhaftenden Boden abzuräumen, ohne ein umfangreiches, komplettes und separates Ausräumaggregat vorsehen zu müssen, was den Ausrüstungsumfang reduziert, verbilligt und außerdem vereinfacht.

Weiter ist denkbar, den Anschluß des einzelnen Säschares (1.4), bzw. des zugeordneten Saatleitungsrohres (3.1) mittels eines Querbolzens (12) und eines zugeordneten Feder-Aggregates (13) federnd nach hinten ausschwenkbar zu gestalten, so daß Hindernisse, z. B. Steine im Boden schadlos überfahren werden. Es ist natürlich auch denkbar, daß der Vorpreßdruck der Feder einstellbar gestaltet ist oder die Säscharfederung mit bekannten Bauteilen in geeigneter Weise sonstwie zu gestalten.
Es wird weiter vorgeschlagen eine geeignete Tiefenverstellung (14), (18) entweder an jedem Säscharhalter (15), oder besser eine Zentral-Tiefenverstellvorrichtung (18) am zentralen Halterstiel (16) anzuordnen, da die das ganze Säscharaggregat tragende und führende Bodenwalze eine präzise Tiefenführung permanent gewährleistet, wie sie kaum ein anders gestaltetes Tiefenführungsaggregat erreicht. Auch hier ist der freien Gestaltung der Tiefenverstellung keine technische Grenze gesetzt, wenn ie nur zweckentsprechend gestaltet ist und funktioniert.
Besonders vorteilhaft für ein störungsfreies Arbeiten unter allen praxisgemäßen Bedingungen ist der erfindungsmäße Vorschlag zufolge Fig. VI das Säschar (1.1) mit einem Vor-Säbel (17) zu versehen, oder nach Fig. VIII.
Der Vorteil beruht darin, daß über das ganze bodenberührende Walzenelemente-Umkreis-Segment von vorne beginnend ein keilartiger Unterlauf und Hindurchzug unter das Säschar hinweg durch die zwei benachbarten Walzenelemente (6) optimal gewährleistet ist und außerdem gleichzeitig ein Einklemmen von nassem, plastischen Boden zwischen den beiden benachbarten Walzenelementen (6) weitgehend verhindert ist.

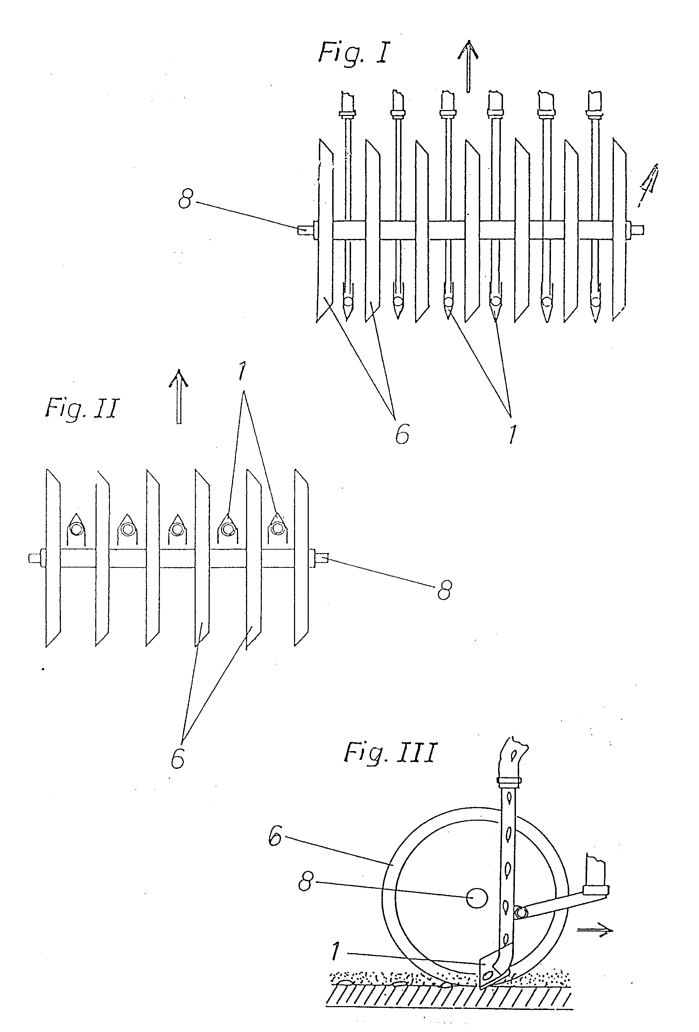

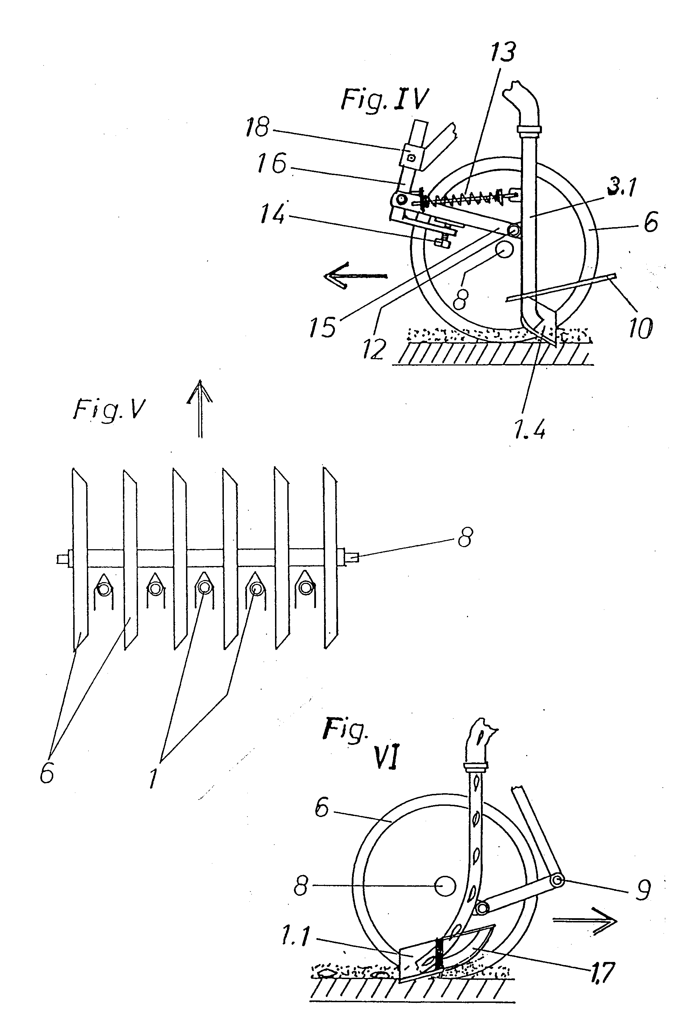

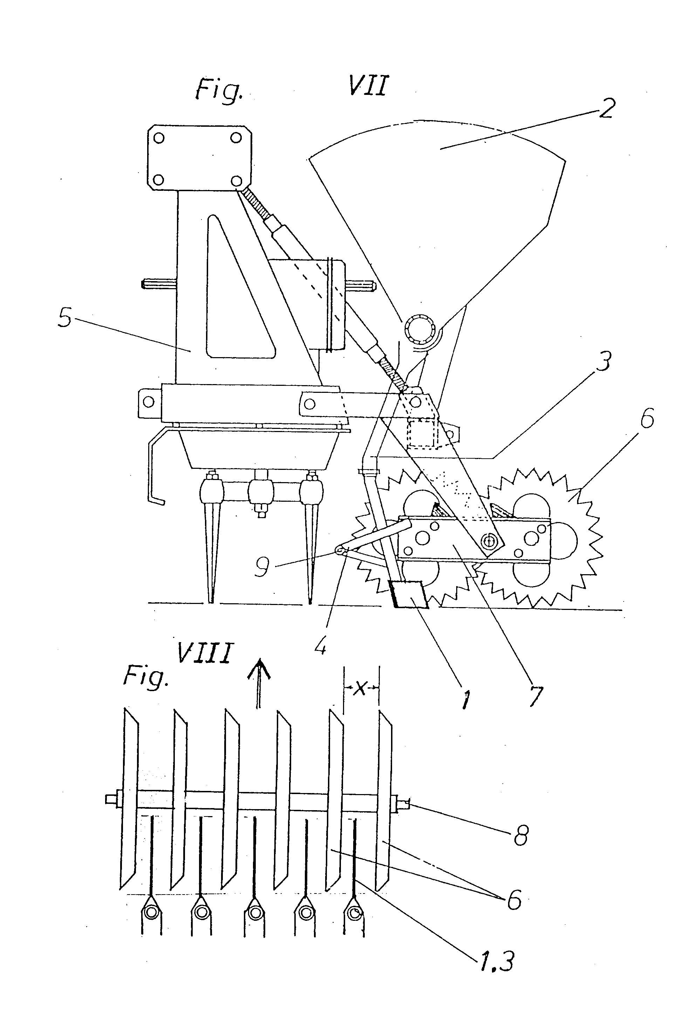

## Patentansprüche

1. Säschare (1), (1.1), (1.3), (1.4), (1.7) zur Aussaat und Einbettung in landwirtschaftlich genutzte Böden von körnigem Gut aus einer Sämaschine (2) , angeordnet nebeneinander, jeweils im Abstand zueinander, in einer Reihe quer zur Fahrtrichtung oder in mehreren Reihen hintereinander gestaffelt, in Wirkverbindung mit einer Boden-Walze (6),(7),deren drehende Achswelle/n (8) sich ebenfalls quer zur Fahrtrichtung erstreckt/erstrecken und auf der/denen die einzelnen Walzenelemente (6) in axialer Richtung jeweils in Abständen zueinander angeordnet sind und jeweils mindestens ein Säschar (1 bis 1.7) zwischen zwei benachbarten und im axialen Abstand nebeneinander auf der Achswelle (8) der Bodenwalze befindlichen Walzenelementen (6) angeordnet in den Boden eingreift, **dadurch gekennzeichnet,** daß das Säschar (1 bis 1.7) so angeordnet ist, daß es mit seiner Vorderkante innerhalb des Umkreises der Walzenelemente (6) in den Boden eingreift.

2. Säschare in Wirkverbindung mit einer Bodenwalze nach Anspruch 1, **dadurch gekennzeichnet,** daß in Draufsicht und Fahrtrichtung gesehen das jeweilige Säschar (1 bis 1.7) mit seiner Vorderkante **vor** der/ den Bodenwalzen-Achswelle/n (8) in den Boden eingreifend angeordnet ist.

3. Säschare in Wirkverbindung mit einer Bodenwalze nach Anschruch 1 und 2, **dadurch gekennzeichnet,** daß in Draufsicht und Fahrtrichtung gesehen das jeweilige Säschar (1 bis 1.7) mit seiner Vorderkante **hinter** der/den Bodenwalzen-Achswelle/n (8) in den Boden eingreifend angeordnet ist.

4. Säschare in Wirkverbindung mit einer Bodenwalze nach Anspruch 1 - 3, **dadurch gekennnzeichnet,** daß das Säschar (1) mit seiner Vorderkante (1.1) innerhalb des Umkreises der Walzenelemente (6) in den Boden eingreift und mit seinem waagrecht fortgesetzten Teil (1.3) nach hinten aus dem Umkreis der Walzenelemente (6) hinausragt und dort an seinem Ende das Särohr (3) haltert.

5. Säschare in Wirkverbindung mit einer Bodenwalze nach Anspruch 1 - 3 , **dadurch gekennzeichnet**, daß das Saatleitungsrohr (3.1) des in Dreufsicht und Fahrtrichtung **hinter** der/den Bodenwalzen-Achswelle/n (8) in den Boden eingreifenden Säschares (1.4) mit einem Boden-Ausräumelement (10) für jeweils zwei benachbarte Walzenelemente (6) versehen ist.

6. Säschare in Wirkverbindung mit einer Bodenwalze nach Anspruch 1 - 5 , **dadurch gekennzeichnet**, daß das Boden-Ausräumelement (10) am vorderen, zum Boden führenden Teil (1.1) des Säschares (1.3) angeordnet ist.

7. Säschare in Wirkverbindung mit einer Bodenwalze nach Anschpruch 1 - 6 , **dadurch gekennzeichnet**, daß die Säschare (1 bis 1.7) gegenüber der Bodenwalze (7), bzw. den Walzenelementen(6) vertikal höhenbeweglich angeordnet sind.

8. Säschare in Wirkverbindung mit einer Bodenwalze nach Anspruch 1 - 7 , **dadurch gekennzeichnet,** daß die Säschare (1 bis 1.7) gegenüber der Bodenwalze (7), bzw. gegenüber den Walzenelementen(6) mittels einer zugeordneten und zweckentsprechend ausgebildeten Stelleinrichtung(14) Tiefgang-begrenzbar angeordnet sind.

9. Säschare in Wirkverbindung mit einer Bodenwalze nach Anspruch 1 - 8, **dadurch gekennzeichnet**, daß die Säschare (1 bis 1.7) mittels einer geeignet ausgebildeten Federeinrichtung (13), (13.1), (13.2) federnd angeordnet sind.

## Claims

1. Drill coulters (1), (1.1), (1.3), (1.4), (1.7) for sowing and embedding of grain-like product from a sowing machine (2) in agriculturally used soils, disposed adjacently, at intervals from each other, staggered in a line transverse to the travel direction or staggered in several lines one behind the other, in interaction with a soil roller (6), (7) whose rotating shaft(s) (8) likewise extend(s) transversely to the travel direction and on which the individual roller elements (6) are disposed at intervals from one another in the axial direction and at least one drill coulter (1 to 1.7) disposed in each case between two adjacent and axially spaced roller elements (6) on said shaft (8) of said soil roller cuts into the soil,
**characterized in that**
said drill coulter (1) to (1.7) is disposed such that it cuts into the soil with its front edge within the circumference of said roller elements (6).

2. Drill coulters in interaction with a soil roller in accordance with Claim 1,
**characterized in that**
when seen in the plan view and the direction of travel, the respective drill coulter (1 to 1.7) is disposed with its front edge such as to cut into the soil **in front of** said soil roller shaft(s) (8).

3. Drill coulters in interaction with a soil roller in accordance with Claims 1 and 2,
**characterized in that**
when seen in the plan view and the direction of travel, the respective drill coulter (1 to 1.7) is disposed with its front edge such as to cut into the soil **behind** said soil roller shaft(s) (8).

4. Drill coulters in interaction with a soil roller in accordance with Claims 1 - 3,
**characterized in that**
said drill coulter (1) cuts into the soil with its front edge (1.1) inside the circumference of said roller elements (8) and projects by its horizontal continuation (1.3) rearwards beyond the circumference of said roller elements (8) and holds there at its end the seed tube (3).

5. Drill coulters in interaction with a soil roller in accordance with Claims 1 - 3,
**characterized in that**
the seed delivery tube (3.1) of said drill coulter (1.4) cutting into the soil **behind** said soil roller shaft(s) (8) when seen in the plan view and in the direction of travel is provided with a soil clearing element (10̸) for each pair of adjacent roller elements (8).

6. Drill coulters in interaction with a soil roller in accordance with Claims 1 - 5,
**characterized in that**
said soil clearing element (10̸) is disposed on the front part (1.1) of said drill coulter (1.3) running to the soil.

7. Drill coulters in interaction with a soil roller in accordance with Claims 1 - 6,
**characterized in that**
said drill coulters (1 to 1.7) are disposed opposite said soil roller (7) or said roller elements (6) for vertical height movement.

8. Drill coulters in interaction with a soil roller in accordance with Claims 1 - 7,
**characterized in that**
said drill coulters (1 to 1.7) are disposed opposite said soil roller (7) or said roller elements (6) for cutting depth limitation by means of an associated and suitably designed adjusting device (14).

9. Drill coulters in interaction with a soil roller in accordance with Claims 1 - 8,
**characterized in that**
said drill coulters (1 to 1.7) are disposed flexibly by means of a suitably designed spring device (13), (13.1), (13.2).

## Revendications

1. Coutres rayonneux (1), (1.1), (1.3), (1.4), (1.7) pour l'ensemencement et l'enfouissement dans des sols à exploitation agricole de semences en graines déversées par un semoir (2), disposés côte à côte à un intervalle donné sur une rangée perpendiculaire à l'axe d'avancement ou sur plusieurs rangées étagées les unes à la suite des autres, agissant en commun avec un rouleau de sol (6), (7) dont le ou les arbres rotatifs (8), également disposé(s) perpendiculairement à l'axe d'avance, supporte(nt) des éléments individuels (6) axialement placés à des écarts respectifs donnés, et au moins un des coutres (1 à 1.7) entre deux des-dits éléments (6) voisins disposés côte à côte à un écart axial donné sur l'arbre (8) du rouleau de sol travaille le sol,
**caractérisés par le fait**
que le coutre (1 à 1.7) est disposé de telle sorte que son nez pénètre dans le sol à l'intérieur de la circonférence des-dits éléments de rouleau (6).

2. Coutres rayonneux agissant en commun avec un rouleau de sol selon la caractéristique 1,
**caractérisés par le fait**
que, vu de dessus et dans l'axe d'avance, le coutre respectif (1 à 1.7) est disposé de telle sorte que son nez pénètre dans le sol **en amont** du ou des arbres rotatifs (8) du rouleau de sol.

3. Coutres rayonneux agissant en commun avec un rouleau de sol selon les caractéristiques 1 et 2,
**caractérisés par le fait**
que, vu de dessus et dans l'axe d'avance, le coutre respectif (1 à 1.7) est disposé de telle sorte que son nez pénètre dans le sol **en aval** du ou des arbres rotatifs (8) du rouleau de sol.

4. Coutres rayonneux agissant en commun avec un rouleau de sol selon les caractéristiques 1 à 3,
**caractérisés par le fait**
que le nez (1.1) du coutre (1) pénètre dans le sol à l'intérieur de la circonférence de l'élément de rouleau (6) et que sa partie rapportée horizontale (1.3) outrepasse vers l'arrière la circonférence de l'élément de rouleau (6), et sert, là, à maintenir l'extrémité du tube d'ensemencement (3).

5. Coutres rayonneux agissant en commun avec un rouleau de sol selon les caractéristiques 1 à 3,
**caractérisés par le fait**
que le tube d'arrivée (3.1) du coutre (1.4) dont le nez, vu de dessus et dans l'axe d'avance, pénètre dans le sol **en aval** du ou des arbres rotatifs (8) du rouleau de sol, est pourvu d'un élément déblayeur (10̸) agissant simultanément pour deux éléments (6) de rouleau voisins.

6. Coutres rayonneux agissant en commun avec un rouleau de sol selon les caractéristiques 1 à 5,
**caractérisés par le fait**
que l'élément déblayeur (10̸) est disposé sur la partie antérieure (1.1) du coutre (1.3), partie qui guide le coutre sur le sol.

7. Coutres rayonneux agissant en commun avec un rouleau de sol selon les caractéristiques 1 à 6,
**caractérisés par le fait**
que les coutres (1 à 1.7) sont, par rapport au rouleau de sol (7), ou aux éléments (6) de rouleau, disposés de sorte à pouvoir être décalés en hauteur sur un axe vertical.

8. Coutres rayonneux agissant en commun avec un rouleau de sol selon les caractéristiques 1 à 7,
**caractérisés par le fait**
que les coutres (1 à 1.7) sont, par rapport au rouleau de sol (7), ou aux éléments (6) de rouleau, disposés de sorte à pouvoir être réglés en profondeur au moyen d'un dispositif respectif (14) approprié et construit à cette fin.

9. Coutres rayonneux agissant en commun avec un rouleau de sol selon les caractéristiques 1 à 8,
**caractérisés par le fait**
que les coutres (1 à 1.7) sont disposés amortis par un dispositif amortisseur approprié (13), (13.1), (13.2) et construit à cette fin.
